# EUROPEAN PATENT APPLICATION

(11) **EP 1 715 284 A1**
(43) Date of publication of application: **25.10.2006**
(21) Application number: 06386007.6
(22) Date of filing: 19.04.2006
(51) Int. Cl.: F41B 3/02, A01K 81/00

(54) **Catapult with closed-loop rubber bands and muzzle equipped with pairs of pulleys**

(30) Priority: 22.04.2005 GR 2005100206
(71) Applicant: Katapotis, Nikolaos, 11523 Athens (GR)
(72) Inventor: Katapotis, Nikolaos, 11523 Athens (GR)

(57) **Abstract**

Catapult with closed-loop rubber bands and pairs of pulleys on the muzzle, and its development into a speargun, characterized in that the muzzle comprises a base (1), which carries pairs of pulleys (2) on each of which, a closed-loop rubber band (4) is arranged, carrying a pulling device (10), which is fixed on each closed-loop rubber band on a position that is located approximately in the middle (9) of the distance between the two pulleys of the corresponding pulley-pair. Each closed-loop rubber band embraces (6) the front pulley (2F) of the corresponding pulley-pair, passing below (7) the rear pulley (2B) and reaching its holding position (8) on the lower side of the speargun's body (18), while when the catapult is in the armed state, the rubber band is rearranged (14) being elongated on the upper side of the catapult's body (18).

Throughout the shot, the plane and direction of movement of the device (10) that pulls the object to be launched are maintained on the upper side of the catapult's body (18) and the closed-loop rubber bands (4) are brought to the relaxed state at the end of the shot without the use of an intercepting mechanism.

## Description

The invention relates to catapults operated by rubber bands.

In common catapults, the rubber bands are positioned and elongated on that side of the catapult where the object to be launched is also positioned. This side is commonly referred to as the upper side of the catapult in relation to the axis of symmetry defined by the direction of motion of the launched object.
The power of catapults is commonly increased by increasing the length of body, the number or diameter of rubber bands used; or by selecting a rubber material featuring a higher modulus of elasticity.
Whichever of the above methods is selected, the use of the catapult becomes more difficult due to emerging problems during its arming and firing.

It is known that the use of pulleys on the muzzle of a catapult can, in theory, increase its power without increasing its length or the force required to arm it.
The introduction of pulleys on the muzzle enables the positioning of the rubber bands on the lower side of the catapult thus allowing their elongation along both the lower and the upper part of the catapult with a resulting increase in its power.

There are known catapults with pulleys on the muzzle.
These catapults are equipped with one or more rubber bands. One end of each rubber band is fixed on the lower side of the catapult's body while the free end, on which the device that pulls the launched object is attached, is driven through a pulley to the upper side where it is held.
In such catapults, it is important during firing to keep the rubber bands' free ends and the pulling device on the upper part of the catapult. Otherwise, the shift in the direction of movement of the pulling system caused by the relaxation of the rubber bands through the pulleys would result in the diversion of the launched object from its original course. To prevent the free ends of the rubber bands (and the pulling device attached on them) from reaching the lower side of the catapult's body, various kinds of stoppers are fixed on the muzzle or the body of the catapult.
This intercepting method constitutes an inherent problem of these catapults.

The violent impact of the rubber bands, during each shot, on the fixed stoppers cause in short time serious damages on the stoppers, the rubber bands or the pulling device, depending on the exact layout of the interception system.
Therefore, although catapults with pulleys on the muzzle appear to be superior compared to common catapults of the same length, their use is problematic and virtually unfeasible.

This invention aims to create a catapult that is superior compared to common catapults of the same length, taking advantage of the theoretical solution offered by the addition of pulleys on the muzzle, as described above, avoiding the associated problems in use.

According to this invention, this aim is achieved (i) by installing one pair of pulleys on the muzzle for the sliding of each rubber band used; (ii) by shaping each rubber band into a closed loop that embraces the front pulley of the corresponding pair and has both its ends fixed (either directly or through some sort of fastener) on the lower side of the catapult's body; and (iii) by adapting the pulling device on the rubber band at a position that lies approximately in the middle between the two pulleys of each pair (when the rubber band is relaxed).

In catapults with closed-loop rubber bands and pulley-pairs on the muzzle, according to this invention, the arrangement of the rubber loops on the corresponding pulley-pairs and the way that they are elongated (as determined by the position of the pulling device on them) (i) enables the maintenance of the plane and direction of movement of the pulling system on the upper side of the catapult's body during the shot; and (ii) leads in the development of reverse forces on each rubber band towards the end of its relaxation resulting in a smooth transition to the relaxed position.

The catapult with closed-loop rubber bands and pulley-pairs on the muzzle, according to this invention, is therefore superior to other catapults with pulleys on the muzzle in that it prevents the deviation of the launched object from its course during the shot without use of additional stoppers thus avoiding the associated problems described above.
Compared to common catapults of the same length with the same number of rubber bands of the same diameter and modulus of elasticity, a catapult according to this invention is superior in that it has greater shooting power. Compared to common catapults of the same length and the same shooting power, achieved using the same number of rubber bands, a catapult according to this invention is superior in that it requires smaller force to arm and shows less violent recoil during the shot. Compared to common catapults of the same length and the same shooting power, achieved using a greater number of rubber bands of the same diameter and modulus of elasticity, a catapult according to this invention is superior in that it shows less violent recoil during the shot.

It thus becomes apparent that it is possible, without significant change in cost, to manufacture and commercially exploit a catapult with closed-loop rubber bands and pulley-pairs on the muzzle, which, as described above, will be superior to both common catapults and known catapults with pulleys on the muzzle.

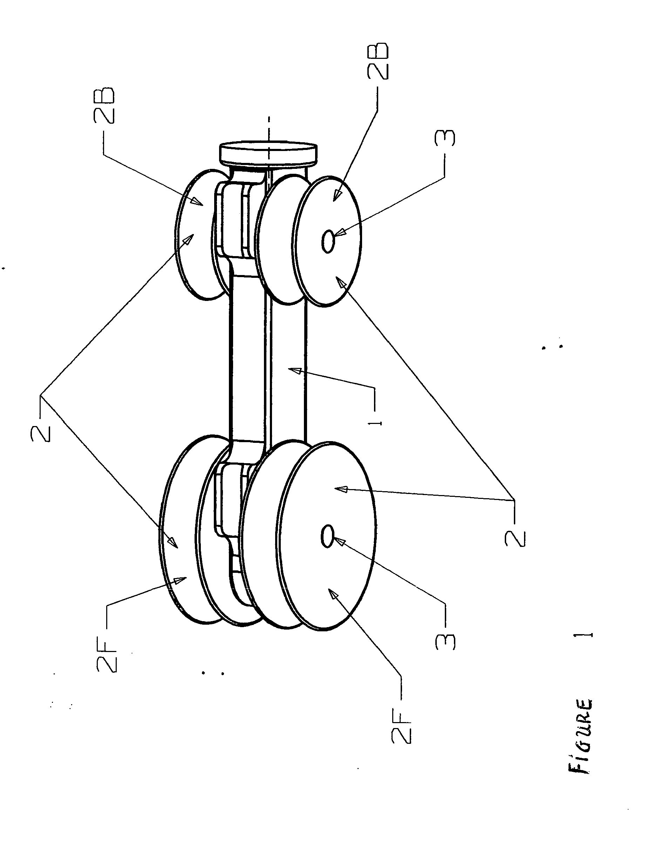

The catapult with closed-loop rubber bands and pulley-pairs on the muzzle, according to this invention, is disclosed and described hereinafter by reference to one of its embodiments, namely a speargun, as shown in the accompanying figures 1, 2, 3, 4, 5 and 6.

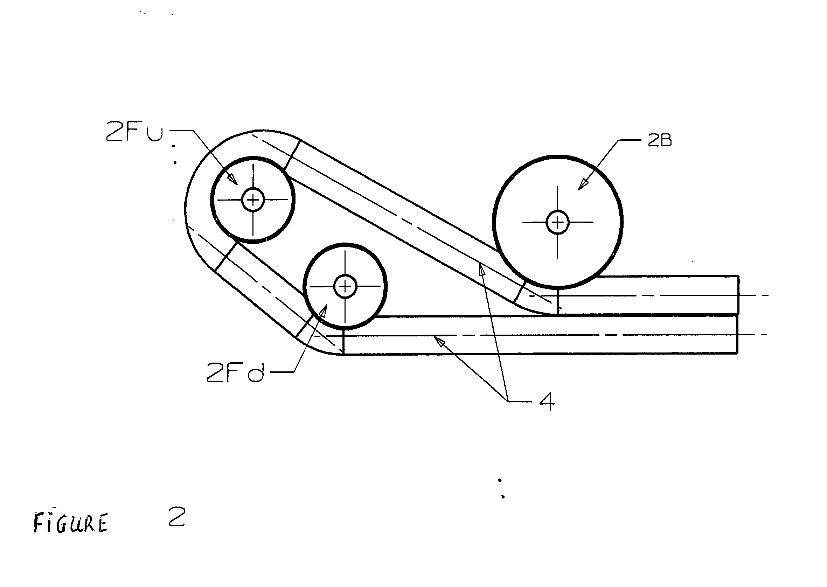

Figure 1 shows, according to this invention, the muzzle compound comprising a base (1) and two pairs of pulleys (2) held on the base with the aid of axes (3). Each pair of pulleys consists of the front pulley (2F) and the rear pulley (2B). Each of the two pulleys is characterized by the fact that it can be replaced by a set of pulleys (2Fu, 2Fd) so that when the two sets are combined they operate like the original pair as shown in figure 2.
The base of the muzzle (1) is presented in the accompanying figures as a separate part which is assembled on the body of the speargun (18). However, it is characterized by the fact that it can also be a special formation of the end of the speargun's body itself.

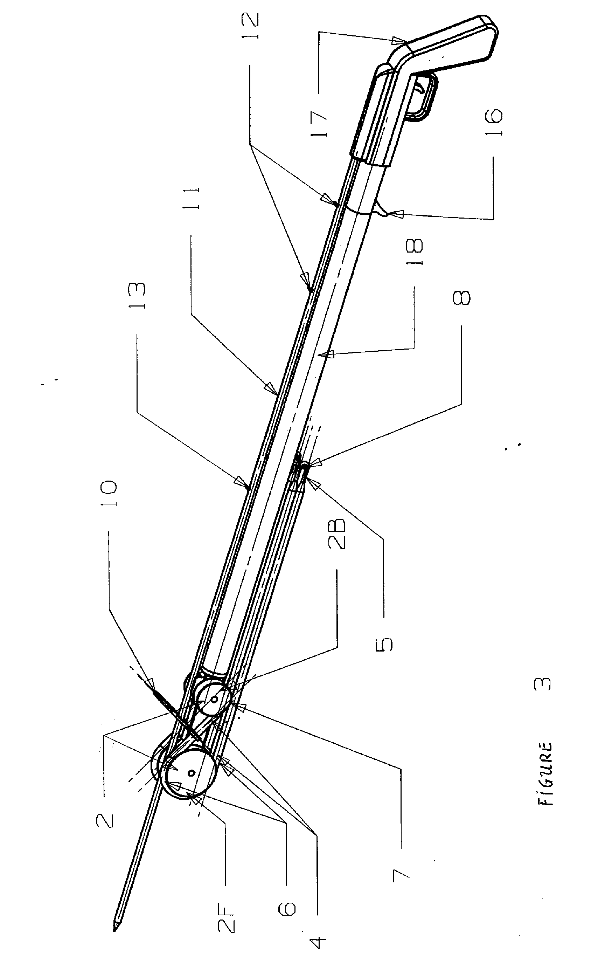

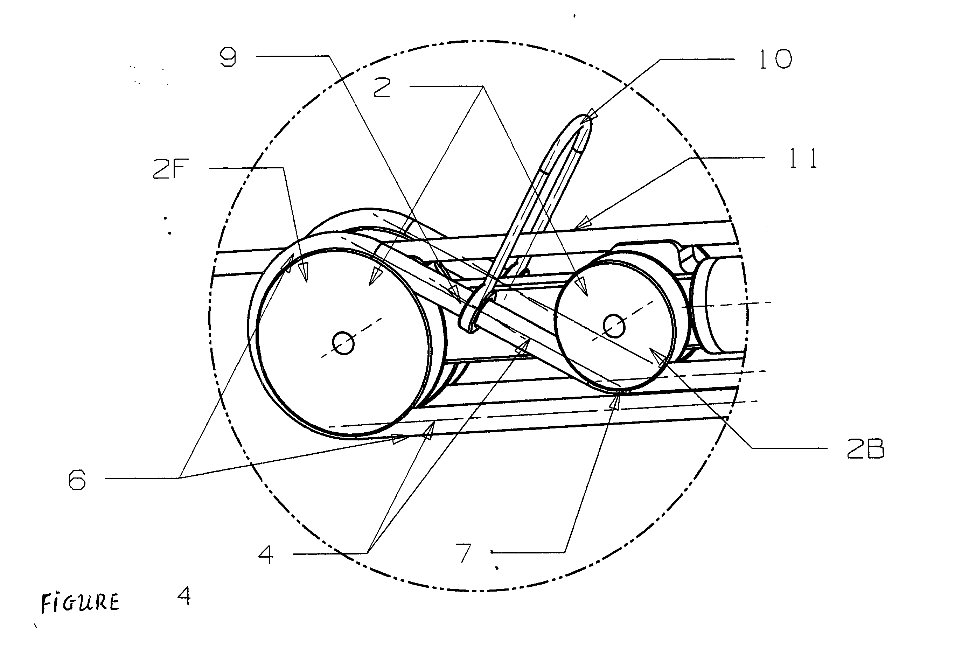

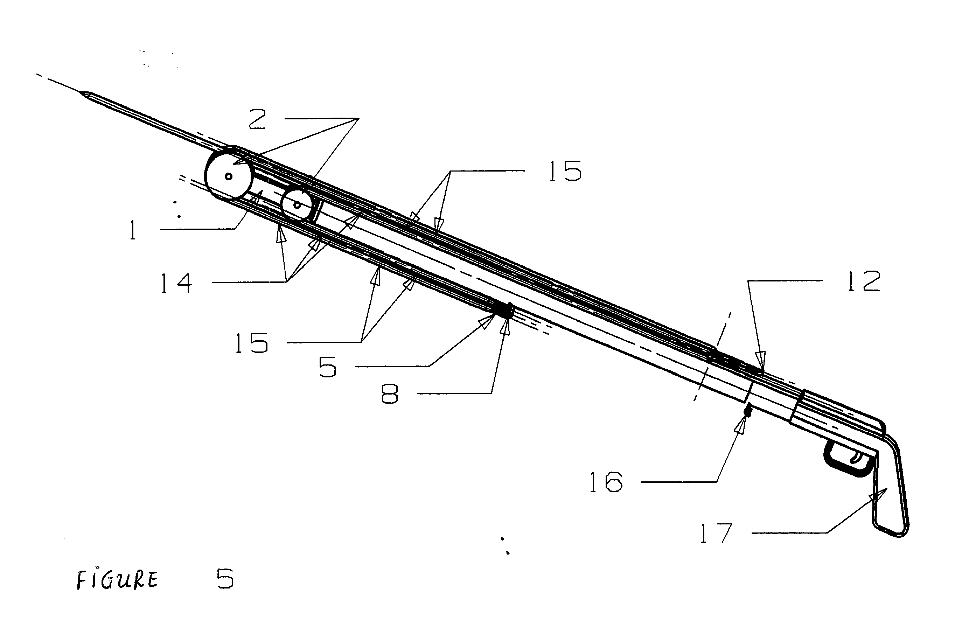

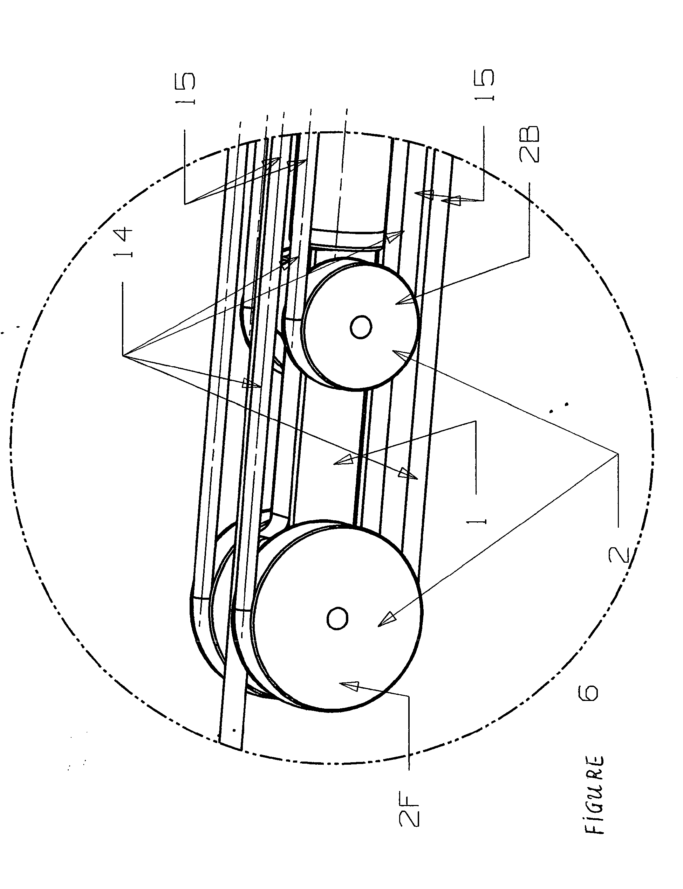

Figure 3 shows, according to this invention, the speargun with closed-loop rubber bands and pulley-pairs on the muzzle in the non-armed state; figure 4 is a detail of figure 3; figure 5 shows the speargun in the armed state and figure 6 is a detail of figure 5.

The speargun with closed-loop rubber bands and pulley-pairs on the muzzle illustrated in these figures carries two closed-loop rubber bands and two corresponding pairs of pulleys. It is characterized, however, by the fact that it can carry more than two closed-loop rubber bands and corresponding pulley-pairs.

The fastener (5), shown in figures 3 and 4, which illustrate the speargun according to this invention in the non-armed state, joins the two ends of each rubber-band forming a closed loop (4). This loop is characterized by the fact that it can also be formed by fixing both ends of each rubber band directly on the body (18) of the speargun. Figures 3 and 4 also illustrate the arrangement of each closed-loop rubber band (4) on the corresponding pair of pulleys, with the loop embracing (6) the front pulley (2F), passing below (7) the rear pulley (2B) and reaching its holding position (8) on the lower side of the body (18) of the speargun; and the position (9) of the pulling device (which in the case of spearguns is commonly called a "wishbone" [10]) of the launched object (which in the case of spearguns is commonly called a "spear" [11]) on the closed-loop rubber band. The spear is characterized by the fact that it can have, apart from the slots or protrusions (12) necessary for the arming of the speargun, an additional slot or protrusion (13) closer to the muzzle, which helps in the arming procedure.

Figures 5 and 6 show the speargun in the armed state. The way that each closed-loop rubber band (14) is rearranged on the corresponding pair of pulleys (2) and elongated into a pair formation (15) when armed makes possible the fixing of each closed-loop on the catapult's lower side (18) while transferring of the elongation area of the rubber bands on the upper side, the maintenance of the direction of movement of the wishbone (10) on the upper side throughout the shot and the interception of the relaxing rubber bands without the use of additional stoppers.

It can be seen in figures 1 and 2 that moving the fixing position of the closed-loop rubber bands from position (8) to position (16) on a speargun with closed-loop rubber bands and pulley-pairs on the muzzle, achieves their maximum elongation.

## Claims

1. Catapult with closed-loop rubber bands and pairs of pulleys on the muzzle, **characterized in that** the muzzle comprises a base (1), which carries two pairs of pulleys (2) held with the aid of axes (3); and by the fact that on each pair of pulleys, a closed-loop rubber band (4) is arranged in such a way that, when the catapult is in the non-armed state, the rubber band embraces (6) the front pulley (2F), passing below (7) the rear pulley (2B) and reaching its holding position (8) on the lower side of the speargun's body (18), while when the catapult is in the armed state, the rubber band is rearranged (14) being elongated in a pair formation (15) both on the upper and the lower side of the catapult's body. It is also **characterized in that** the pulling device (10), which pulls the object to be launched (11), is fixed on each closed-loop rubber band on a position that is located approximately in the middle (9) of the distance between the two pulleys of the corresponding pulley-pair, in the non-armed state.

2. Catapult with closed-loop rubber bands and pairs of pulleys on the muzzle developed into a speargun with closed-loop rubber bands and pairs of pulleys on the muzzle, according to claim 1, **characterized in that** it consists of a handle (17), a body (18), a spear (11), closed-loop rubber bands (4) with an attached wishbone (10) and a muzzle, whose base (1) is adapted on the body (18) of the speargun and carries two pairs of pulleys (2) on axes (3), and that on each pair of pulleys, a closed-loop rubber band (4) is arranged in such a way that it embraces (6) the front pulley (2F) passing below (7) the rear pulley (2B), its two ends being held (8) on the lower side of the body (18) of the speargun, while when the speargun is in the armed state, the rubber band is rearranged (14) being elongated in a pair formation (15) both on the upper and the lower side of the speargun's body.

3. Catapult with closed-loop rubber bands and pairs of pulleys on the muzzle, according to claims 1 and 2, **characterized in that** the base of the muzzle (1) takes shape by the appropriate formation of the front end of the catapult's body.

4. Catapult with closed-loop rubber bands and pairs of pulleys on the muzzle, according to claims 1 and 2, **characterized in that** each of the two pulleys of each pair on the muzzle has been replaced by a set of pulleys (2Fu, 2Fd) so that when the two sets are combined they operate like the original pair.

5. Catapult with closed-loop rubber bands and pairs of pulleys on the muzzle, according to claims 1 and 2, **characterized in that** the muzzle carries more that two pairs of pulleys.

6. Speargun with closed-loop rubber bands and pairs of pulleys on the muzzle, according to claim 2, **characterized in that** each rubber band is formed into a closed-loop by joining its two free ends with a fastener (5) and that the wishbone (10) is fixed on the closed-loop at a position approximately in the middle (9) of the distance between the two pulleys of the corresponding pulley-pair (when the speargun is in the non-armed state).

7. Speargun with closed-loop rubber bands and pairs of pulleys on the muzzle, according to claims 2 or 6, **characterized in that** each closed-loop is formed by joining the free ends of two separate rubber bands.

8. Speargun with closed-loop rubber bands and pairs of pulleys on the muzzle, according to claim 2, **characterized in that** each rubber band is itself of closed-loop shape without the use of a fastener.

9. Speargun with closed-loop rubber bands and pairs of pulleys on the muzzle, according to claim 2, **characterized in that** the spear (11) has, apart from the slots or protrusions (12) necessary for the arming of the speargun, an additional slot or protrusion (13) near the muzzle and in a position that depends on the length of the speargun.
